Europäisches Patentamt

European Patent Office

Office européen des brevets

(19)

(11) Numéro de publication : **0 056 778**
**B1**

(12) FASCICULE DE BREVET EUROPÉEN

(45) Date de publication du fascicule du brevet :
18.09.85

(51) Int. Cl.⁴ : **F 16 L  1/04, H 02 G  1/10,
E 02 F  5/10**

(21) Numéro de dépôt : 82430001.6

(22) Date de dépôt : 12.01.82

(54) **Dispositif pour mettre en place un câble dans une tranchée pratiquée au fond de la mer.**

(30) Priorité : 14.01.81 FR 8100699

(43) Date de publication de la demande :
28.07.82 Bulletin 82/30

(45) Mention de la délivrance du brevet :
18.09.85 Bulletin 85/38

(84) Etats contractants désignés :
BE DE FR GB IT NL SE

(56) Documents cités :
FR-A- 2 278 854
FR-A- 2 388 094
FR-A- 2 427 436
US-A- 2 067 717
US-A- 2 099 527
US-A- 2 202 156
US-A- 3 434 297
US-A- 4 129 992

(73) Titulaire : TRAVOCEAN Société à Responsabilité
Limitée dite
148, rue Sainte
F-13007 Marseille (FR)

(72) Inventeur : Gempp, Albert
379, Boulevard Grignan
F-83000 Toulon (FR)

(74) Mandataire : Moretti, René et al
C/O Cabinet BEAU DE LOMENIE 14, rue Raphael
F-13008 Marseille (FR)

# Description

La présente invention a pour objet un dispositif pour mettre en place un câble dans une tranchée pratiquée au fond de la mer.

Le secteur technique de l'invention est celui des travaux sous-marins et plus particulièrement celui des appareillages utilisés dans le cadre de tels travaux.

On connaît déjà des matériels pour réaliser l'enfouissement des câbles dans le sol marin. Certains de ces appareils sont manœuvrés par des plongeurs, sont adaptés pour se déplacer sur le fond et comportent un soc qui creuse une tranchée dans laquelle le câble est enterré. D'autres appareils comportent au lieu d'un soc, une excavatrice pour creuser la tranchée.

D'autres matériels sont constitués de deux parties, par exemple un tracteur monté sur chenilles comportant les moyens de creusement de la tranchée, de manutention des câbles et un engin mobile venant s'adapter sur le tracteur et à partir duquel engin les ordres de commande aux dispositifs moteurs, de direction, excavateur et de manutention portés par le tracteur, sont transmis.

On connaît également une machine pour enterrer des câbles sous-marins correspondant au préambule de la revendication 1 (US-A-3 434 297), laquelle se compose de deux tracteurs à chenilles, reliés l'un à l'autre par un joint d'articulation. Le tracteur antérieur comporte à l'avant une poutre articulée pour pivoter dans le sens vertical et horizontal et adopter, en fin de courses, une position inclinée vers le sol et une position sensiblement parallèle à celui-ci. Les deux tracteurs sont descendus au fond de la mer en même temps au moyen d'un câble issu d'un support de surface. Ladite poutre portée par le tracteur antérieur comporte une mâchoire pour prendre le câble, l'élever jusqu'à ce que la poutre soit horizontale et l'enterrer dans la tranchée. Ladite mâchoire est déplaçable le long de la poutre et a pour fonction de tirer le câble vers l'arrière pendant l'avancement de la machine. L'excavatrice comporte des buses pour creuser la tranchée dans le fond marin. Ladite excavatrice comporte une glissière d'une section droite en U, ouverte à sa partie inférieure et formant une paroi courbe sur laquelle s'appuie le câble pendant son enfouissement.

On connaît aussi d'autres machines décrites dans les brevets US-A-2 099 527 et US-A-2 202 156, destinées à poser des câbles sous-marins dans une tranchée.

Bien que les machines décrites dans les trois brevets US ci-dessus concernent des dispositifs pour poser des câbles sous-marins dans une tranchée pratiquée au fond de la mer, les moyens mis en œuvre pour obtenir ce résultat sont différents de ceux qui équipent le dispositif selon l'invention. Notamment, aucune desdites machines antérieures n'est adaptée pour mettre en œuvre le processus de pose des câbles selon l'invention consistant en leur mise en tension et leur relâchement appelé « détentionnement » et qui sera exposé plus loin.

La présente invention est relative à un appareillage d'une conception nouvelle comparativement aux dispositifs actuellement connus, cet appareillage étant de surcroît adapté pour enterrer des câbles notamment des câbles électriques dans des conditions de sécurité pour les câbles, imposées du fait de la structure de tels câbles, lesquels sont composés d'éléments hétérogènes.

On sait que l'étanchéité des câbles sous-marins est réalisée notamment par une gaine de plomb qui entoure les conducteurs. De tels câbles, de forte section, sont lourds.

Lors de leur pose au fond de la mer, avant qu'ils soient enterrés dans une tranchée pratiquée dans le sol marin, les câbles, issus d'un support de surface, par exemple une barge, sont, selon une technique, déroulés à partir de cette dernière pour être déposés sur le fond. Compte tenu de leur poids et du frottement des câbles sur le fond, au fur et à mesure de leur déroulement et donc de la longueur de câbles en appui par leur propre poids sur le sol marin, une tension se crée dans les câbles. Cette tension dite « tension de pose » peut atteindre une valeur excessive à laquelle il est exclu de pratiquer l'enfouissement des câbles dans cet état, sans risques de dégradation ultérieure du fait de la fatigue permanente des câbles.

L'objectif de la présente invention est un appareillage adapté pour réaliser l'enfouissement des câbles notamment des câbles électriques dans le sol marin et ramener la tension dans lesdits câbles à une valeur acceptable pour les enterrer dans cet état dans le fond marin. L'invention telle qu'elle est caractérisée dans la revendication 1 atteint cet objectif.

Des modes particuliers de réalisation de l'invention apparaissent dans les revendications dépendantes.

Un avantage du dispositif selon l'invention se situe au niveau de sa constitution du fait qu'il est composé de deux parties, une dite « inerte », destinée à rester au fond de la mer pendant la durée des travaux et l'autre mobile, pouvant être manutentionnée à partir d'un support de surface, ou encore pouvant être autonome, comporte tous les équipements nécessaires pour réaliser les travaux à effectuer : les centrales d'énergie, les organes moteurs et l'excavatrice pour le creusement de la tranchée. Ledit engin mobile est alimenté en énergie électrique par le support de surface. Ainsi l'engin mobile peut s'atteler et se désolidariser de l'ensemble « inerte » reposant sur le fond marin, sans l'intervention de plongeurs. Ledit engin peut être remonté à bord du navire de surface aux fins de maintenance ou de réparation.

L'ensemble inerte à l'intérieur duquel circulent les câbles reste normalement au fond en permanence ; toutefois, en cas d'incident, des plongeurs peuvent dégager les câbles et tout ou partie de l'ensemble inerte peut être remonté aux fins de réparation à bord du support de surface.

Cette conception selon laquelle le dispositif est composé de plusieurs parties est intéressante notamment du fait que l'ensemble est d'un poids relativement élevé, la manutention desdites parties rendant les opérations facilitées.

Le dispositif de détensionnement comportant les bras de manutention soumis à une force constante permet :

d'évaluer la valeur de la tension dans chaque câble,

d'abaisser la valeur de cette tension quand elle devient excessive.

Les bras de manutention sont, dans un mode de réalisation, au nombre de deux respectivement sur babord et sur tribord à l'avant du dispositif.

L'excavatrice étant portée par une poutre articulée et déplaçable d'avant en arrière, il est possible de faire reculer l'excavatrice en cas de blocage de la chaîne à godets, sans être obligé de faire reculer l'engin mobile ce qui facilite la conduite du dispositif.

L'articulation de la partie de l'ensemble inerte à l'autre comportant les guides-câbles et le maintien de tranchée, et celle de la poutre qui porte l'excavatrice à l'engin mobile permettent au dispositif d'accuser des changements de directions pendant qu'il est opérationnel.

Le dispositif de blocage des câbles interdit toute mise en tension préjudiciable de la partie des câbles déjà enterrée au fond de la mer.

D'autres avantages et les caractéristiques de l'invention ressortiront encore à la lecture de la description ci-jointe d'un mode de réalisation d'un dispositif selon l'invention, en référence au dessin annexé sur lequel :

la figure 1 est un ensemble de trois diagrammes illustrant les tensions dans un câble avant et pendant son enfouissement dans le sol marin, selon la technique mise en œuvre par le dispositif selon l'invention,

la figure 2 est une vue en élévation du dispositif selon l'invention,

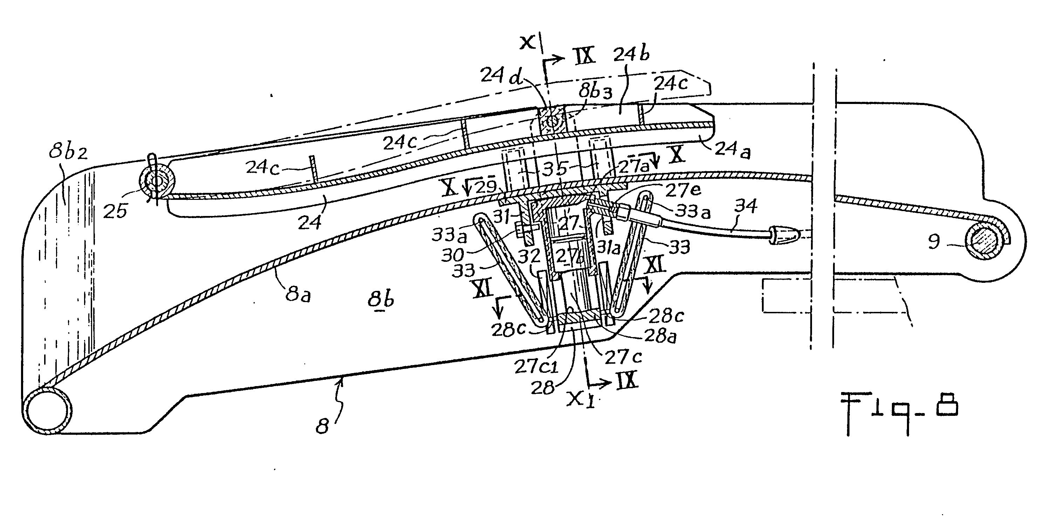

la figure 3 est une vue de gauche de la figure 2,

la figure 4 est une demi-vue de dessus partielle de la figure 2,

la figure 5 est une vue en élévation de l'organe dit « maintien de tranchée »,

la figure 6 est une vue en coupe suivant la ligne VI-VI de l'organe de la figure 5,

la figure 7 est une vue en élévation à plus grande échelle du dispositif de détensionnement selon l'invention,

la figure 8 est une vue en coupe longitudinale d'un bras de manutention sur laquelle est représenté le patin de freinage du câble,

la figure 9 est une vue en coupe suivant la ligne IX-IX de la figure 8,

la figure 10 est une vue en coupe suivant la ligne X-X de la figure 8,

la figure 11 est une vue en coupe suivant la ligne XI-XI de la figure 8,

la figure 12 est un schéma illustrant les moyens hydrauliques pour actionner les patins de freinage des câbles,

la figure 13 est une vue en coupe de la partie avant des engins mobile et inerte accouplés, illustrant la situation du vérin moteur et du vérin transmetteur.

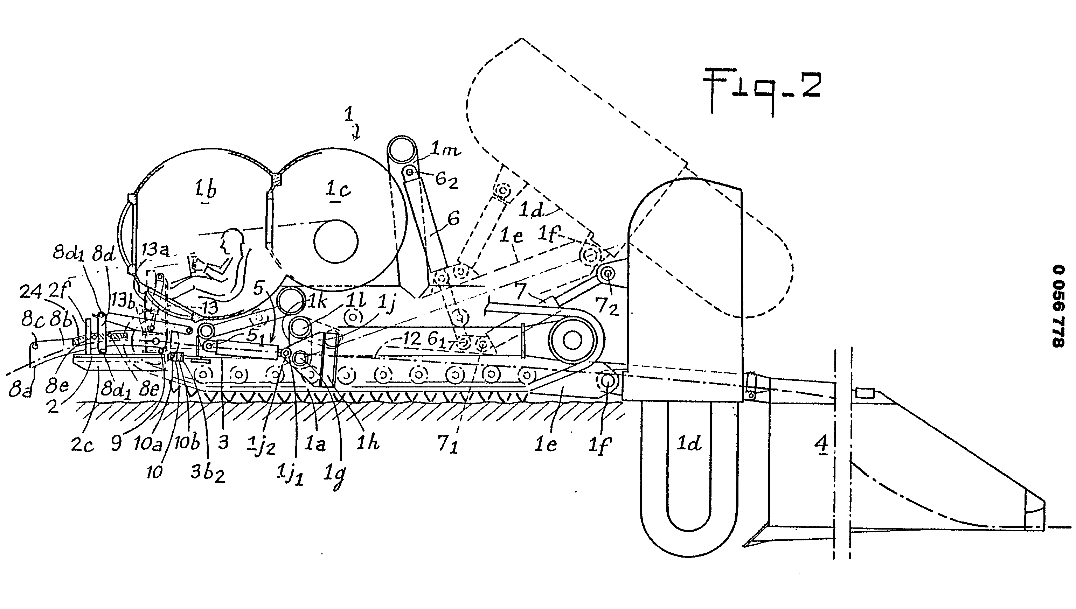

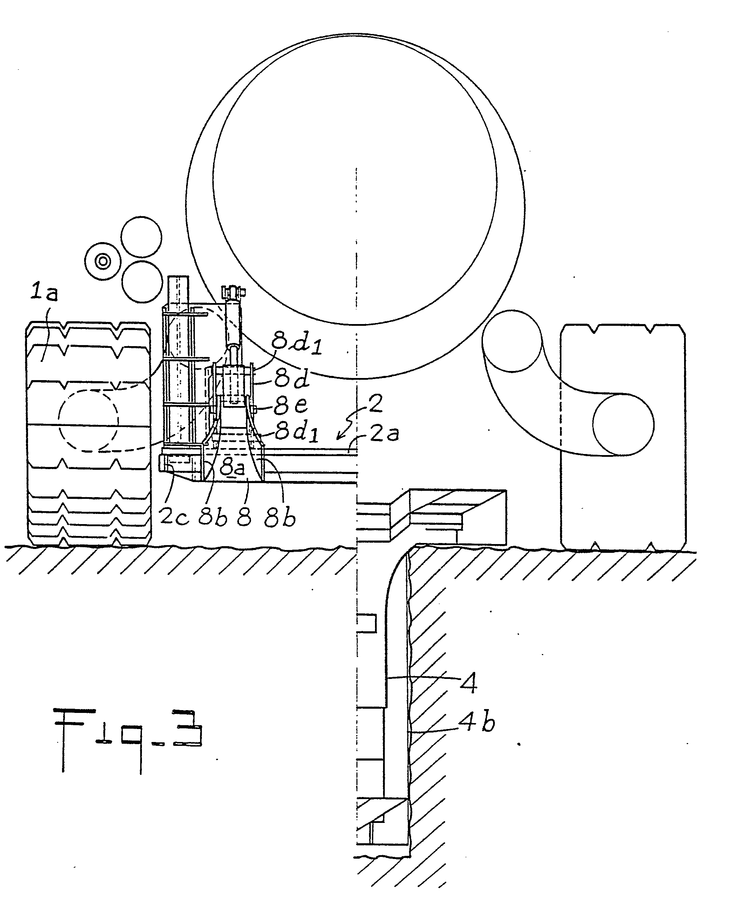

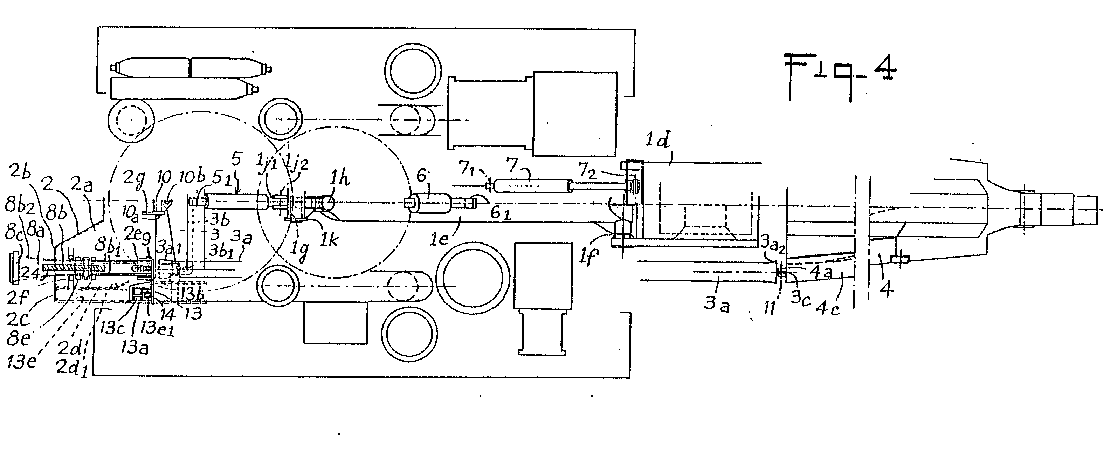

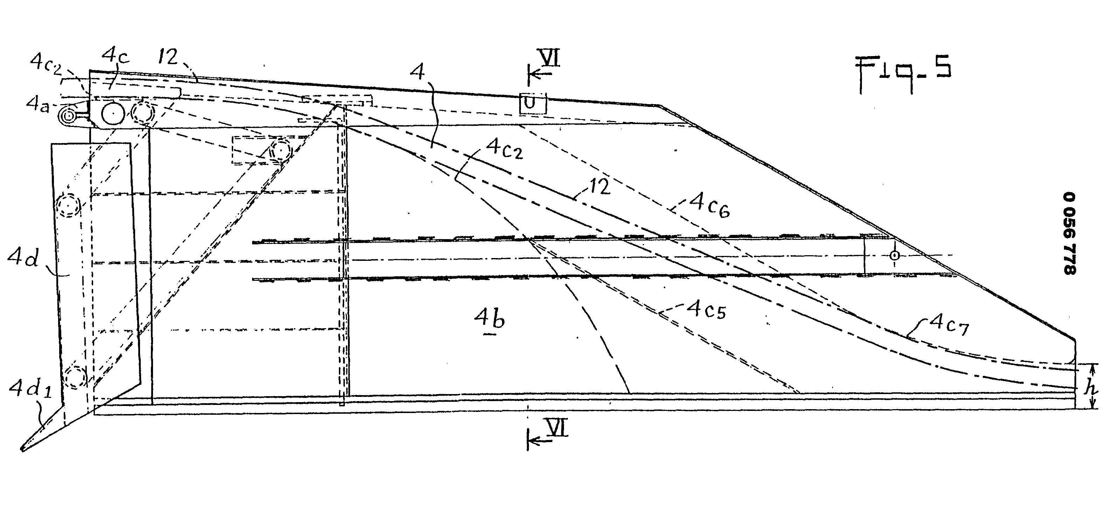

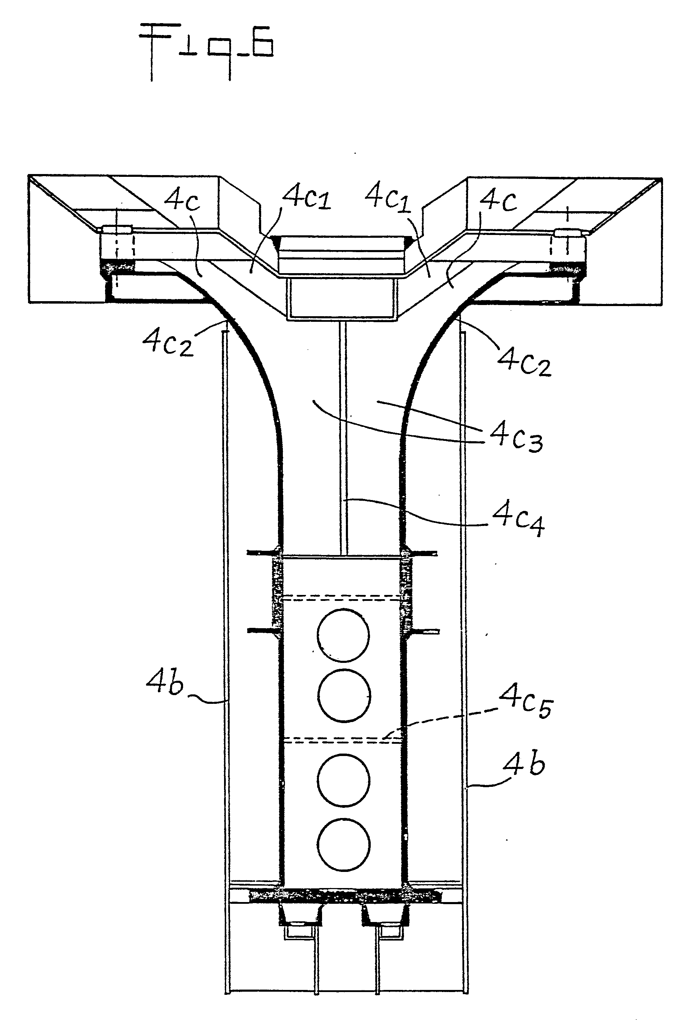

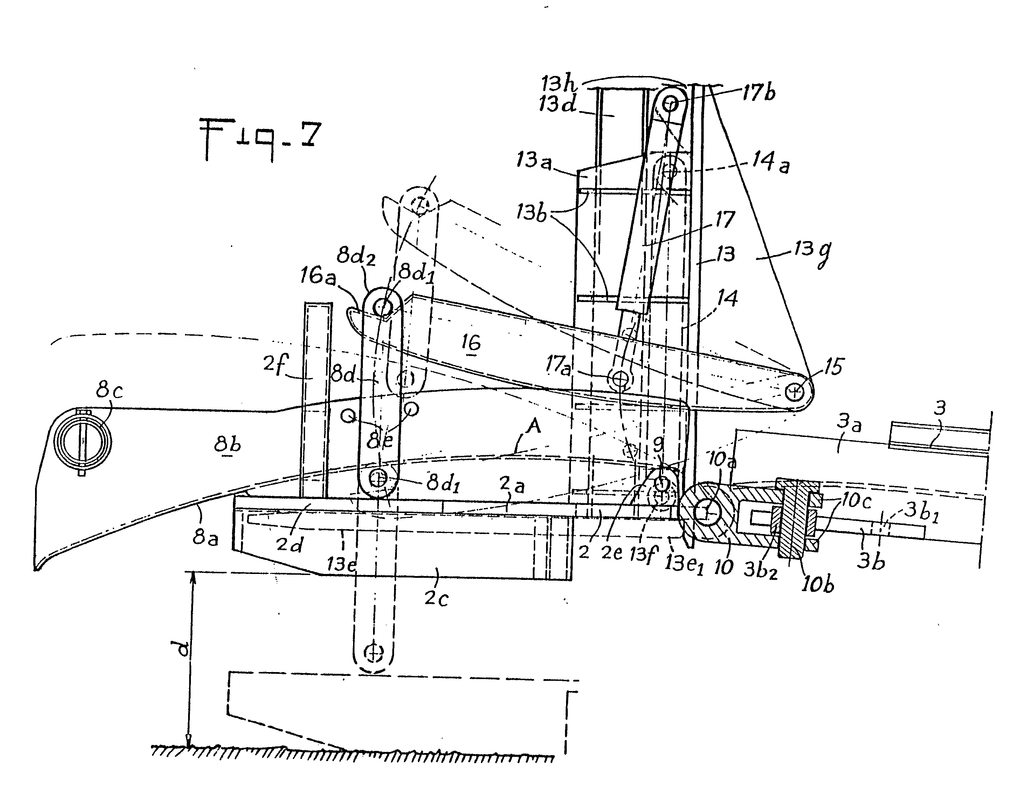

On se reporte d'abord à la figure 2 du dessin qui illustre d'une manière schématique un dispositif selon l'invention. Celui-ci se compose d'un engin mobile 1 et d'un ensemble dit « inerte » 2/3/4, adapté pour être pris en charge par l'engin mobile 1.

L'engin mobile 1 se compose d'une structure sur laquelle sont montées à la partie inférieure des chenilles 1a qui enjambent l'ensemble « inerte ». Cet engin 1 comporte, à sa partie supérieure, un habitacle sphérique 1b communiquant avec un sas 1c également sphérique ainsi qu'une excavatrice 1d. L'habitacle et son sas sont situés à l'avant de l'engin, l'excavatrice est située dans l'axe longitudinal de la machine, à l'arrière, de telle sorte qu'elle puisse être mise en position de travail juste en avant et sensiblement dans l'axe de l'organe maintient de tranchée 4, comme l'illustre le tracé en trait plein de la figure 2. On a également représenté sur cette figure et en traits pointillés, les diverses positions que peut adopter l'excavatrice 1d. Celle-ci est montée articulée à l'extrémité d'une poutre 1e autour d'un axe 1f sensiblement horizontal pour pouvoir pivoter dans un plan vertical.

La poutre 1e qui compose l'organe de manœuvre de l'excavatrice pour l'abaisser dans la position de creusement de la tranchée ou la relever pour la mettre en position de repos et de manœuvre de l'engin mobile est articulée autour d'un axe sensiblement horizontal 1g.

La poutre 1e est articulée à son extrémité opposée à celle où est articulée l'excavatrice 1d, autour d'un axe 1h sensiblement perpendiculaire à son axe longitudinal, lequel axe 1h est situé dans un plan vertical.

La poutre 1e est articulée ainsi d'une part pour pivoter dans le sens transversal autour de l'axe 1h, et d'autre part pour pivoter dans le sens vertical, autour de l'axe 1g, lequel est engagé dans une pièce intermédiaire 1j, appelée noix. deux biellettes 1k, montées d'une part autour de l'axe 1g et autour d'un axe 1l, fixé à la structure de l'engin, supportent la poutre au niveau de la noix 1j.

Les biellettes 1k sont situées de part et d'autre de la noix 1j, laquelle comporte une chape $1j_1$ dans laquelle est montée autour d'un axe $1J_2$ la tige mobile d'un vérin à double effet 5, articulé par l'extrémité libre de son corps à la structure de l'engin 1 autour d'un axe $5_1$. L'élévation et l'abaissement de la poutre 1e est provoqué par un vérin à double effet 6, articulé à la porte autour d'un axe sensiblement horizontal $6_1$ et autour d'un axe $6_2$ monté dans une chape fixée à un portique 1m disposé transversalement à l'engin 1 et chevauchant en partie 1e sas 1c. Comme on peut le voir sur le dessin, le portique 1m est légèrement incliné du côté dudit sas.

Le pivotement de l'excavatrice 1d autour de la poutre 1e est provoqué par deux vérins à double effet 7, articulés autour d'un axe $7_1$ relié à la poutre et parallèle à l'axe $6_1$, et autour d'un autre axe $7_2$ monté dans une chape 1n fixée à la structure de l'excavatrice et situé au-dessus de l'axe 1f autour de laquelle elle pivote.

Du fait de la conception du montage de la poutre 1e sur la structure de l'engin 1, par l'intermédiaire des biellettes 1k, l'excavatrice 1d, portée par la poutre 1e, peut être reculée sous l'efet du vérin 5, qui, en appui sur l'axe $5_1$, provoque le pivotement des biellettes 1K sous l'effet du déploiement de sa tige mobile et corrélativement le déplacement d'avant en arrière de l'excavatrice. Une intervention sur les vérins 6/7 permet de maintenir l'excavatrice dans une position sensiblement verticale et la dégager pendant le creusement de la tranchée si pour une raison quelconque la chaîne à godets venait à se bloquer ou s'engorger ou en cas d'avarie.

L'engin mobile 1 comporte tous les équipements nécessaires aux travaux sous-marins à effectuer et notamment les centrales d'énergie et les organes moteurs. Il est relié au support de surface par un ombilical (non représenté sur le dessin), l'énergie électrique fournie par le navire porteur est notamment acheminée par l'ombilical jusqu'à l'engin mobile. L'engin mobile 1 comporte également une partie des moyens pour le détensionnement des câbles électriques, lesquels sont disposés à l'avant du dispositif, une autre partie de ces moyens étant portés par l'ensemble « inerte » 2/3/4. Ces moyens, représentés en détail sur la figure 7, seront décrits plus loin.

L'ensemble inerte 2/3/4 se compose d'un bâti 2, relié à un élément intermédiaire 3, comportant des guides-câbles, lequel est également relié à l'organe maintien de tranchée 4.

Le bâti 2, réalisé en mécano-soudure se compose d'une tôle de forte épaisseur 2a, raidie par des voiles, comportant deux prolongements 2b s'étendant dans le sens de l'avancement du dispositif et situés de part et d'autre du bâti. Chacun de ces prolongements comporte au-dessous de la tôle 2a et le long de chacun des côtés latéraux du bâti, un logement 2c destiné à recevoir une corne d'un organe de manutention dont il sera question plus loin.

Ce logement est d'une section droite, de préférence carrée, et peut être ouvert à sa partie inférieure. Sa paroi latérale interne 2d est pliée en $2d_1$ pour former une entrée évasée destinée à faciliter la pénétration de la corne dans le logement.

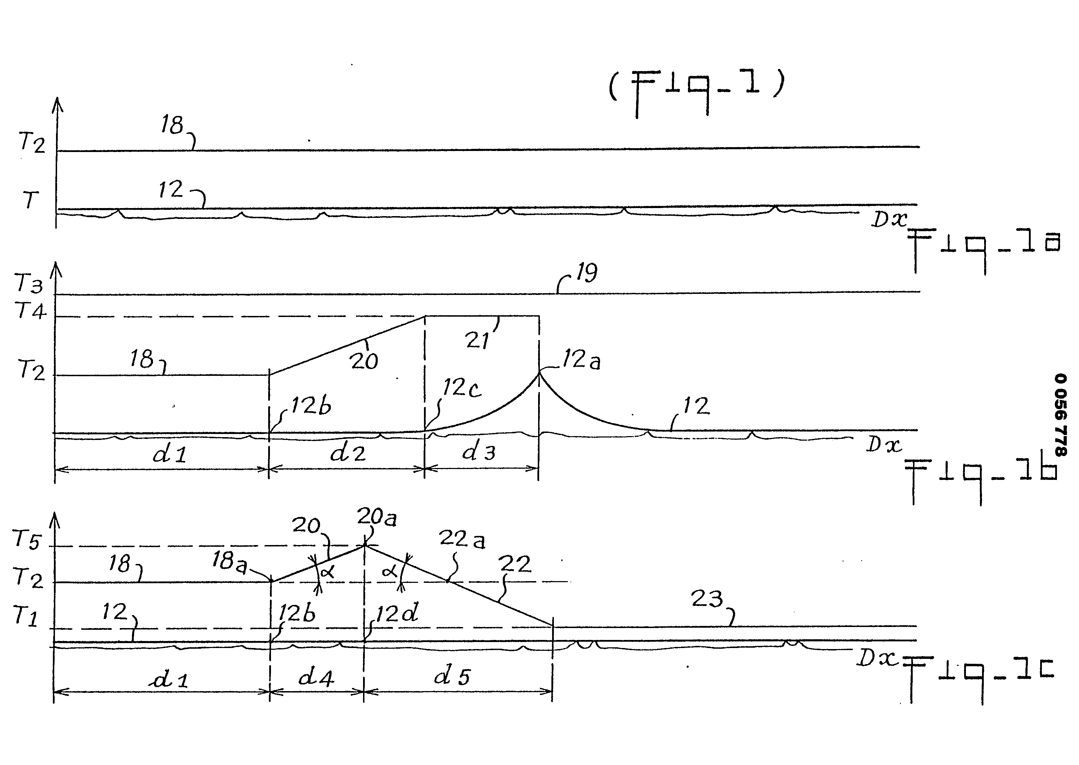

Le bâti 2 comporte (fig. 1, 4 et 7) au droit de chacun des prolongements 2b et au-dessus de la tôle 2a, un bras de manutention 8, lequel est articulé sur le bâti autour d'un axe horizontal 9. Le bras 8 s'étend en avant du bâti 2 et est d'une section droite en U et comporte ainsi une paroi de fond 8a et deux parois latérales 8b.

La paroi de fond 8a est courbe et convexe et est d'un profil dont le rayon est par exemple de 2 m 50 pour un câble d'un diamètre compris dans la fourchette suivante : 90 à 120 mm. La courbure de la paroi dans le sens longitudinal est établie en fonction du diamètre du câble afin d'éviter la détérioration de celui-ci.

Les parois latérales 8b sont parallèles sur une partie de leur longueur $8b_1$ à partir du point d'articulation du bras et sont courbes du côté de son extrémité libre $8b_2$, de telle sorte qu'elles s'écartent progressivement l'une de l'autre pour former une entrée évasée afin de faciliter le mouvement relatif du câble et de l'engin et également de pallier les défauts d'alignement du câble. Les parois 8b sont reliées à l'extrémité libre du bras par une entretoise tubulaire 8c.

Chaque bras 8 est monté à pivotement dans une chape 2d fixée au bâti 2, à sa partie arrière, et dans laquelle est engagé l'axe 9.

A mi-longueur, il comporte un étrier 8d composé de deux fers plats latéraux reliés à chacune de leurs extrémités par une entretoise cylindrique $8d_1$. Comme on peut le voir sur le dessin, l'entretoise, située à la partie inférieure, est au contact de la partie inférieure de la paroi courbe 8a du bras, quelle que soit la position angulaire du bras. Au repos le bras est en appui sur l'entretoise 8d, laquelle est supportée par le bâti 2. La partie supérieure $8d_2$ de l'entretoise s'étend au-dessus du bras pour permettre d'y introduire un organe élévateur dont il sera question plus loin.

Les entretoises sont maintenues prisonnières mais libres de se déplacer sur le bras au moyen de quatre bossages-guides 8e fixés à la face extérieure de chaque paroi latérale 8b. Les bras 8 sont guidés latéralement par des montants 2f perpendiculaires à la tôle 2a et parallèles entre eux à raison de deux montants par bras, lesquels montants ont pour fonction de soulager les articulations des bras lors de la manutention des câbles. Les montants sont disposés en avant des étriers 8d.

A sa partie centrale et à l'arrière, le bâti 2 comporte une chape 2g dans laquelle s'articule une pièce de liaison 10, laquelle comporte deux axes perpendiculaires entre eux et décalés l'un par rapport à l'autre : un axe 10a horizontal et engagé dans la chape 2g du bâti 2 et un axe 10b perpendiculaire à l'axe 10a. La pièce 10 forme une chape 10c dans laquelle est passé l'axe 10b pour réaliser l'attelage de l'élément intermédiaire 3. Celui-ci se compose essentiellement d'une structure comportant des guides-câbles 3a s'étendant le long des bords latéraux de l'élément 3. Les guides-câbles 3a sont des éléments tubulaires rectilignes d'une section droite rectangulaire et leurs extrémités $3a_1/3a_2$ sont évasées pour faciliter la circulation des câbles. Ils sont reliés entre eux à leur partie avant du côté du bâti 2 au moyen d'un palonnier 3b en forme d'aileron symétrique, lequel est articulé en $3b_1$ auxdits guides-câbles 3a.

Les éléments 3a sont dans le prolongement des bras de manutention 8 et ont pour fonction de guider et protéger les câbles : du bâti 2 à l'organe « maintien de tranchée » 4.

L'attelage de l'ensemble milieu 3 au bâti 2 est réalisé au moyen de la pièce 10 dans laquelle le palonnier 3b est partiellement engagé. Celui-ci comporte un manchon $3b_2$ soudé à l'avant et au milieu de l'aileron. Le manchon $3b_2$ passé dans la chape 10c de la pièce 10 reçoit l'axe 10b, lequel assure la liaison du bâti 2 et de l'ensemble 3, ainsi que l'articulation de l'un et de l'autre.

La liaison de l'ensemble milieu 3 et de l'organe maintien de tranchée 4 est réalisée d'une manière articulée autour de deux axes horizontaux 11.

Chaque élément tubulaire 3a comporte à son extrémité arrière un tenon 3c percé transversalement.

Ce tenon est engagé dans une chape 4a, fixée audit organe maintien de tranchée 4. L'axe 11 est passé dans la chape 4a et dans le tenon 3c et est maintenu dans le sens transversal par tous moyens connus, par exemple au moyen de clips.

L'organe maintien de tranchée 4 (fig. 5 et 6) est réalisé en tôle de forte épaisseur mécano-soudée et est approximativement sur la moitié de sa longueur et du côté de l'élément milieu 3 d'une section droite en forme de T.

Sa fonction est d'assurer la continuité des câbles de l'extrémité arrière de l'élément milieu 3 jusqu'au fond de la tranchée. Il comporte ainsi deux parois latérales parallèles entre elles et espacées l'une de l'autre d'une valeur correspondant à la largeur de la tranchée obtenue au moyen de l'excavatrice 1d. Ces parois sont d'une hauteur sensiblement égale à celle de la tranchée et sont situées à la partie avant de l'organe 4. Celui-ci comporte deux conduits 4c prenant naissance dans le prolongement et au niveau des guides-câbles 3a de l'élément milieu 3 et qui infléchissent les câbles vers le bas pour les ramener de part et d'autre de l'axe longitudinal du dispositif et côte à côte au fond de la tranchée. Ces conduits 4c sont composés par des parois formant des surfaces porteuses et d'appui destinées à conduire les câbles.

Les conduits 4c sont d'une section courbe dans leur partie située du côté de l'élément milieu 3. Ils se composent chacun d'une paroi latérale $4c_1$ et d'une paroi de fond $4c_2$, laquelle est courbe et convexe et s'étend du niveau de la paroi de fond des guides-câbles 3a jusqu'à la partie extrême inférieure de l'organe 4. La courbure des parois $4c_2$ est fonction des caractéristiques physiques des câbles : de leur section, raideur, poids et résistance notamment.

Les conduits 4c convergent d'avant en arrière de l'organe 4 vers le fond et l'axe longitudinal de la tranchée. A l'endroit $4c_4$ où ils se rejoignent, ils comportent une cloison commune $4c_4$ située dans le plan de symétrie de l'organe 4. Un plan incliné $4c_5$ prolonge les parois $4c_2$ jusqu'à la partie extrême inférieure du maintien de tranchée. Ce plan incliné $4c_5$ prend naissance sensiblement à mi-hauteur de l'organe 4 et s'étend jusqu'à ladite partie inférieure en formant un angle de l'ordre de 30° avec l'horizontale.

Lesdits conduits comportent également une paroi supérieure $4c_6$ qui constitue ladite surface d'appui qui oblige les câbles à se poser sur le fond de la tranchée.

Cette paroi $4c_6$ est courbe à son extrémité arrière $4c_7$, laquelle se situe à une hauteur h par rapport à la structure inférieure de l'organe 4. Son profil est rectiligne à sa partie avant et s'étend sur cette partie parallèlement au plan incliné $4c_5$.

Le câble 12, tracé en traits mixtes sur les figures 2 et 5 et provenant des guides-câbles 3a de l'ensemble milieu 3 est d'une part supporté par la paroi $4c_2$ et d'autre part en appui sur la partie courbe $4c_7$ de la paroi $4c_6$.

L'organe maintien de tranchée 4 comporte du côté de l'ensemble milieu 3 un dispositif 4d pour niveler le fond de la tranchée, lequel comporte à sa partie inférieure, une lame inclinée $4d_1$. Le dispositif 4d est porté par une structure à déplacement longitudinal pour lui permettre de réaliser sa fonction.

L'engin mobile 1 comporte à l'avant les moyens pour prendre en charge et provoquer le déplacement de l'ensemble inerte 2/3/4 et également pour actionner les bras de manutention 8. L'engin mobile comporte ainsi une structure mécano-soudée comprenant de part et d'autre du poste de conduite 1b, un voile de forte épaisseur 13 s'étendant dans un plan perpendiculaire et transversal à l'engin 1 et des caissons 13a raidis par des voiles 13b délimitant les bords latéraux de ladite structure. Lesdits caissons 13a sont d'une section droite rectangulaire et sont dans une position verticale. Ils comportent à l'intérieur deux glissières en bronze 13c parallèles l'une à l'autre et entre lesquelles est disposé un coulisseau d'une section droite en H 13d. Chaque coulisseau 13d comporte, à sa partie inférieure, une corne 13e fixée par soudure, laquelle s'étend dans une position horizontale du côté du bâti 2 et est destinée à être engagée dans les logements 2c de celui-ci. Ainsi chaque ensemble glissière/coulisseau : 13c/13d, est fixé à l'engin mobile 1 pour venir dans le prolongement desdits logements. L'écartement des cornes 13e est sensiblement égal à celui des logements 2c du bâti 2. Chaque corne 13e comporte un prolongement $13e_1$ à sa partie arrière auquel est articulée en 13f la tige mobile d'un vérin à double effet 14, articulé par son autre extrémité en 14a, à la partie supérieure du caisson 13a. Ces vérins 14 actionnent les cornes et provoquent leur déplacement dans le sens vertical.

Dans un autre mode de réalisation, l'engin mobile 1 comporte une seule corne 13e, s'étendant dans l'axe de l'engin, laquelle coopère lors de la prise en charge de l'engin inerte 2 avec un logement 2c, situé dans l'axe dudit engin 2.

Chaque voile 13 comporte, sur sa face située vers l'arrière du dispositif, un gousset de forte épaisseur 13g s'étendant dans un plan perpendiculaire au voile 13. Ce gousset comporte un axe en porte à faux 15, déporté sur l'arrière du voile 13 et situé du côté de la partie inférieure de celui-ci et autour duquel axe 15 est monté à pivotement un levier 16 s'étendant vers l'avant de la machine et au-delà du voile 13. Le pivotement des leviers 16 est provoqué par des vérins à double effet 17, articulés d'une part sur le levier en 17a et d'autre part sur la structure 13 en 17b, autour d'un axe passé à travers une chape 13h fixée au voile 13.

Chaque levier 16 est réalisé en mécano-soudure et comporte à son extrémité libre 16a, une échancrure en forme de crochet, pour coopérer avec l'entretoise $8d_1$ de l'étrier 8d.

Dans le but d'interdire la mise en tension de la partie des câbles 12 s'étendant des bras 8 à la tranchée dans laquelle ils sont enterrés, le dispositif comporte des moyens de freinage commandés du poste de pilotage habité 1b de l'engin mobile 1. Ces moyens consistent en des patins de freinage 24, portés par les bras 8 de l'engin inerte 2 et représentés par un contour hachuré sur les figures 2 et 4 du dessin.

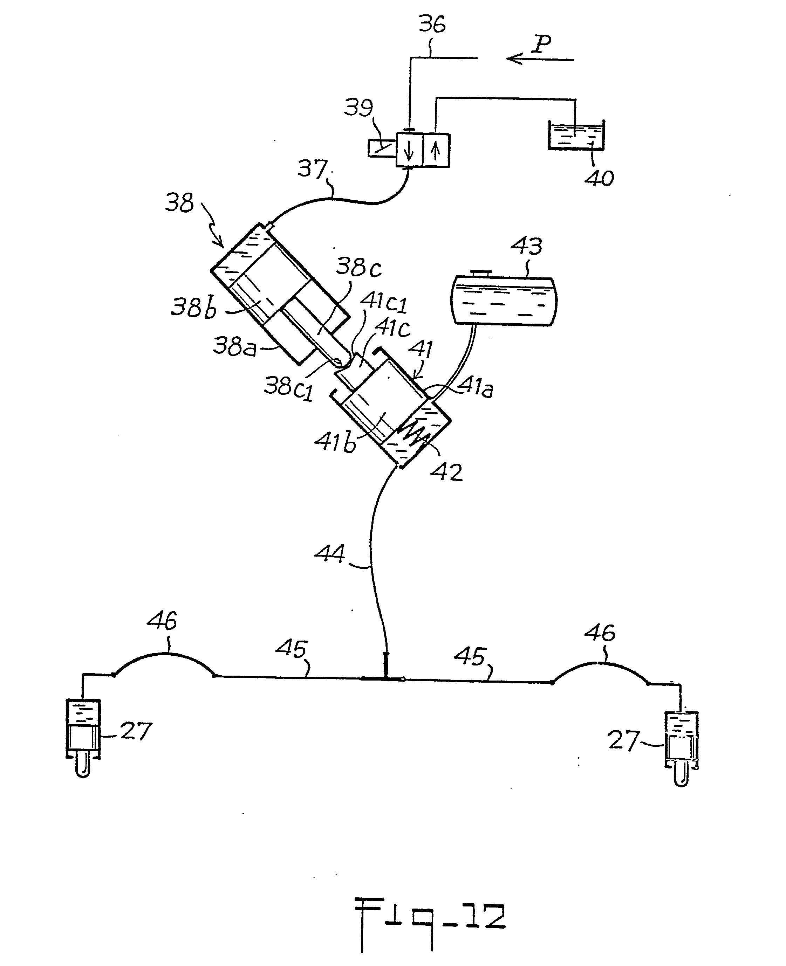

Un mode de réalisation des patins de freinage est plus particulièrement illustré aux figures 8 à 11 du dessin, qui représente un bras 8 dans une variante d'exécution par rapport à celle décrite en référence à la figure 7.

Le bras 8 comporte une paroi de fond 8a qui est d'un profil courbe et convexe et dont le rayon est par exemple de 2,650 m, pour un câble d'un diamètre extérieur de 105 mm.

Comme le bras précédemment décrit, les parois latérales 8b sont parallèles entre elles sur la quasi longueur du bras et s'écartent progressivement à son extrémité libre $8b_2$ pour former une entrée évasée dans le but de faciliter le déplacement du câble dans le couloir formé par les parois 8a/8b. Les parois latérales 8b se prolongent à la partie inférieure du bras 8 et au-dessous de la paroi de fond 8a, de telle sorte que le bras est d'une section droite en forme de H (fig. 9).

Le patin 24 est dans un mode de réalisation, articulé par une de ses extrémités, au bras 8 autour d'un axe 25 rejoignant les parois latérales supérieures 8b et du côté de la partie avant du bras 8.

La partie 24a venant au contact du câble est réalisée à partir d'une portion du tube cylindrique refendu, d'un profil courbe et s'étend parallèlement à la paroi de fond 8a du bras. Ladite portion de tube se prolonge du côté de l'articulation 25 et est contrecourbé en $24a_1$ pour former avec ladite paroi de fond 8a, une entrée évasée située du côté de l'extrémité avant du bras. La mâchoire 24 comporte une âme centrale 24b ainsi que des voiles 24c s'étendant transversalement à l'âme 24b et soudés à celle-ci et à la portion tubulaire 24a.

La mâchoire comporte en outre une pièce parallélépipédique 24d, s'étendant transversalement à l'âme 24b et parallèle aux voiles 24c, laquelle pièce est située approximativement aux deux tiers de la longueur de la mâchoire comptés à partir de l'articulation 25.

La pièce 24d est traversée par un axe 26, immobilisé par exemple au moyen d'une épingle 27 engagée dans une gorge 26a, réservée à la périphérie de l'axe 26. Ledit axe 26 se prolonge de part et d'autre de la mâchoire 24 et tel qu'illustré à la figure 9, se déplace pendant le fonctionnement du frein, dans des échancrures $8b_3$ pratiquées dans les parois latérales 8b du bras 8.

Le pivotement de la mâchoire 24 est obtenu au moyen d'un vérin hydraulique à simple effet 27 agissant sur un étrier 28 articulé à la mâchoire 24 et autour de l'axe 26.

Le vérin 27 est disposé au droit de l'axe 26 et entre les parois latérales inférieures 8b du bras 8 et s'étend dans une direction sensiblement orthogonale à la paroi de fond 8a du bras. Le corps du vérin comporte à une extrémité une portée bombée 27a, formant une proéminence et venant, lors du serrage de la mâchoire 24, en appui sur la paroi de fond 8a du bras 8, par l'intermédiaire d'une contre-plaque 29.

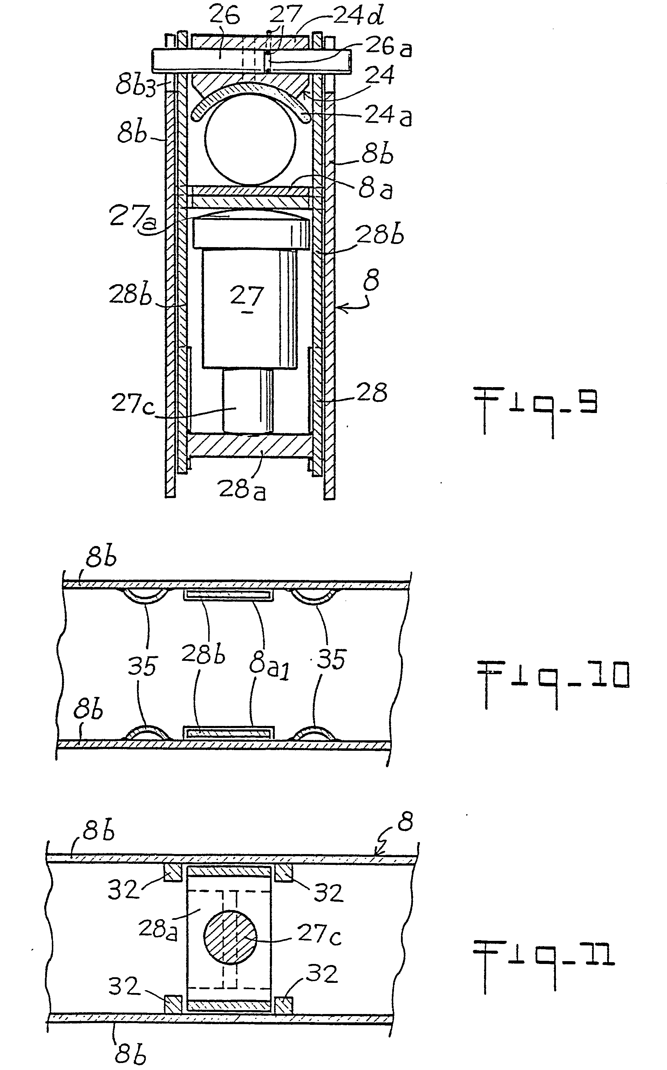

Le vérin 27 est monté « libre » sur le bras 8, et est maintenu en position par des vis à tétons 30 vissées dans des parois 31, situées de part et d'autre du vérin et soudées à la contre-plaque 29 et aux parois 8b du bras. Le piston 27b du vérin se prolonge à l'extérieur du corps de celui-ci par une tige 27c, dont l'extrémité $27c_1$, qui est bombée, est au contact de la traverse basse 28a rejoignant les deux plats latéraux 28b de l'étrier 28. Les plats latéraux 28b traversent la paroi de fond 8a du bras en passant dans des ouvertures d'un contour rectangulaire $8a_1$ (fig. 10).

L'étrier 28 est guidé, à sa partie inférieure, par des parties de fer d'une section droite carrée 32, parallèles entre elles et sensiblement à l'axe XX1 du vérin 27, et soudés aux parois inférieures 8b du bras.

L'étrier 28 comporte, au niveau de la traverse 28a et de part et d'autre, des points d'attache 28c d'un contour en U et auxquels sont passés des câbles élastiques en caoutchouc synthétique 33 qui entourent d'autres points d'attache 33a, fixés au bras 8 et au-dessous de la paroi de fond 8a.

Ces câbles élastiques 33 ont pour fonction de ramener la mâchoire 24 en position ouverte, lorsqu'on cesse d'envoyer l'huile sous pression dans le vérin 27.

Une des parois 31 comporte une ouverture circulaire à sa partie médiane 31a, à travers laquelle est passé le conduit d'alimentation 27e du vérin, dont le fluide sous pression est amené par un flexible 34, raccordé audit conduit 27e.

Le couloir situé au-dessus de la paroi de fond 8a comporte de part et d'autre des plats latéraux 28b des étriers 28, des déflecteurs 35 fixés aux parois 8b du bras.

Ces déflecteurs 35 (fig. 10) sont des portions de tube refendu d'une hauteur supérieure au rayon du câble 1. Ces déflecteurs sont parallèles entre eux et sensiblement à l'axe de l'étrier XX1.

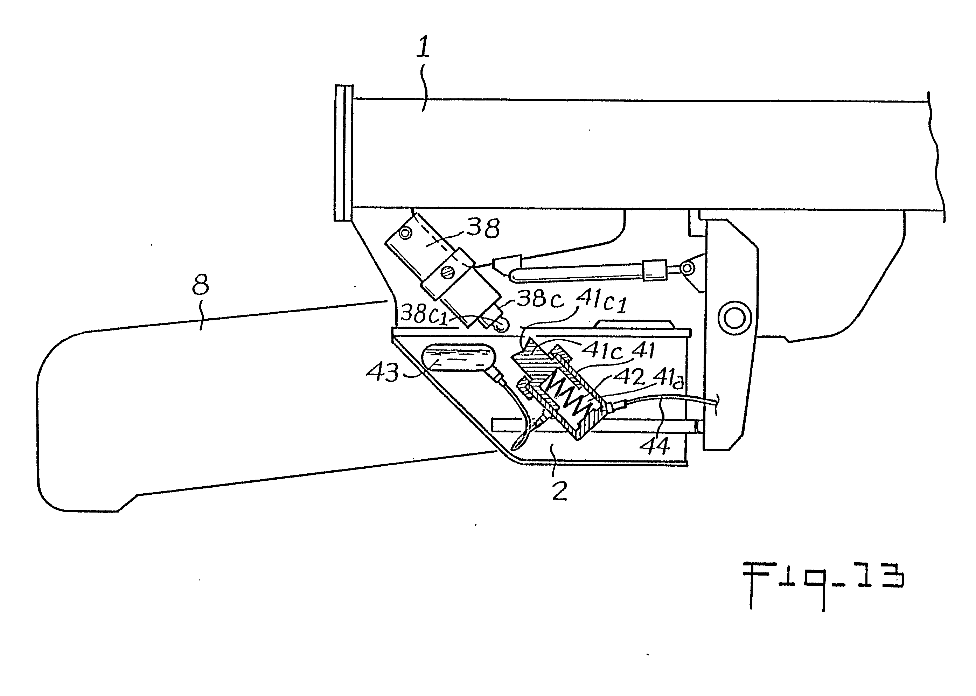

On se reporte maintenant aux figures 12 et 13 du dessin qui illustrent les moyens hydrauliques qui permettent d'actionner la mâchoire de chacun des bras 8.

La figure 12 représente schématiquement les organes essentiels qui composent lesdits moyens hydrauliques qui équipent une machine comportant deux bras de manutention 8.

L'huile mise en pression par un groupe hydraulique, non représenté, porté par l'engin mobile 1 est envoyée par un conduit rigide 36 et un flexible 37 dans un vérin moteur 38 à travers un distributeur de fluide à commande électrique 39, relié à une caisse à huile 40 et commandé à partir du poste de pilotage 1b.

Le vérin moteur 38 est un vérin à simple effet et est monté sur l'engin mobile. Il se compose d'un corps 38a, formant une chambre dans laquelle se déplace un piston 38b, prolongé par une tige mobile 38c qui s'étend à l'extérieur du corps 38a.

Lorsque l'engin mobile 1 a pris en charge l'engin inerte 2, le vérin moteur 38 se trouve dans le prolongement d'un vérin transmetteur 41 porté par l'engin inerte 2.

Le vérin 41 se compose d'un corps 41a formant une chambre dans laquelle se déplace un piston 41b. Ledit piston comporte un prolongement 41c formant une cavité $41c_1$ à son extrémité libre.

L'extrémité $38c_1$ de la tige 38c du vérin moteur 38 est généralement sphérique et prend appui dans la cavité $41c_1$, lorsque le vérin 38 est sous pression. Un ressort antagoniste 42, en appui sur le fond de la chambre 41a et sur le piston 41b, tend à pousser le prolongement 41c du côté du vérin moteur 38.

La chambre 41a est remplie d'huile et est d'une part en communication avec un bac 43 contenant une réserve d'huile compensatrice et d'autre part, reliée auxdits vérins récepteurs 27, qui actionnent les mâchoires 24 par l'intermédiaire d'un flexible 44 d'une conduite rigide 45 et de flexibles 46.

La figure 13, qui est une vue partielle des engins mobile 1 et inerte 2, représentés assemblés l'un à l'autre, illustre la situation des vérins moteur 38 et transmetteur 41 par rapport aux bras de manutention 8.

Le vérin moteur 38 est disposé à l'avant et au-dessous de la partie du châssis de l'engin mobile qui recouvre l'engin inerte 2. Le vérin transmetteur 41 est disposé à la partie supérieure de l'engin inerte 2.

Lorsque l'engin inerte 2 est pris en charge par l'engin mobile 1, les deux vérins sont dans le prolongement l'un de l'autre tel que l'illustre le dessin, de telle sorte que le vérin moteur 38 est en position pour actionner le vérin transmetteur 41.

L'ensemble inerte ayant été descendu au fond de la mer, se trouve en attente sur le sol marin, le bâti 2 reposant sur le fond. Les bras de manutention en appui sur le bâti 2 ont leurs étriers en position verticale d'attente.

L'engin mobile 1 par exemple manutentionné à partir d'un support de surface est mis de telle sorte à chevaucher l'ensemble inerte en étant toutefois en arrière du bâti 2.

Les leviers 16 sont inclinés vers le bas dans la position A, illustrée sur la figure 7, les cornes 13e sont descendues et sont mises devant et dans le prolongement des logements 2c du bâti 2.

L'engin 1, se déplaçant sur le sol marin, est avancé du côté du bâti 2 et l'opérateur le manœuvre pour engager en totalité les cornes 13e dans les logements 2c et corrélativement l'extrémîté des leviers 16 dans les étriers 8d jusqu'à ce que les entretoises $8d_1$ viennent en butée sur l'échancrure formant le crochet 16a.

Le bâti 2, sous l'effet des vérins 14, est élevé jusqu'à ce que sa partie extrême inférieure se situe approximativement à une distance d du sol, de l'ordre de quatre cent millimètres. L'élévation du bâti 2 provoque l'élévation de l'ensemble milieu 3.

L'engin est alors dans sa position opérationnelle.

Le creusement de la tranchée ayant été préalablement effectué et l'organe 4 mis en place dans celle-ci, on dispose les câbles sur le dispositif en les engageant dans les bras 8, les guides-câbles 3a de l'ensemble milieu 3 et enfin dans l'organe maintien de tranchée 4 jusqu'à ce qu'ils soient mis côte à côte sur le fond de la tranchée.

Les câbles 12 sont à ce moment soumis à une tension T2 dite tension de pose consécutivement à leur déroulement à partir du support de surface en vue de leur dépose sur le fond marin, cette tension étant considérée comme étant uniforme sur la longueur du câble tel que l'illustre le diagramme de la figure 1a, sur lequel la tension de valeur T2, portée sur l'ordonnée du diagramme, est matérialisée par la ligne 18.

On a porté en abscisse la longueur du câble Dx.

On actionne les mâchoires de blocage 24 pour immobiliser la partie de câble 12 déjà ensouillée, de manière à ne pas créer dans cette partie une tension indésirable.

Du poste de pilotage 1b, on agit sur le distributeur de fluide à commande électrique 39, lequel ouvre le circuit hydraulique et alimente le vérin 38. Celui-ci actionne le vérin 41 qui, relié aux vérins 27 portés par les bras de manutention 8, provoque par l'intermédiaire des étriers 28, le pincement des câbles dans les bras du fait du pivotement des mâchoires 24 du côté de la paroi de fond 8a desdits bras.

Au terme de l'opération de détentionnement, la fermeture du distributeur 29, et donc l'interruption de la mise en pression de l'huile dans le vérin 38, a pour conséquence de ramener les mâchoires 24 à leur position d'ouverture pour libérer le câble 12, sous l'effet des câbles élastiques en caoutchouc synthétique 33.

A partir de moyens hydrauliques reliés aux vérins 17, on crée une force de levage constante F pour élever les bras 8 actionnés par les leviers 16 et ainsi soumettre les câbles simultanément à leur élévation à une tension T4 supérieure à ladite tension de pose T2 mais inférieure à une tension T3, cette tension étant une tension plafond prédéterminée. Cette phase de la manœuvre est représentée sur le diagramme de la figure 1b.

La tension plafond T3 portée en ordonnée est matérialisée par la ligne continue 19. Les câbles 12 pris en charge par les bras 8 sont élevés au droit du point 12a sur le diagramme, d'une hauteur résultant de la force costante F appliquée au câble et des propriétés physiques de celui-ci.

On applique ainsi le principe de la « chaînette ». Les tensions dans le câble sont matérialisées par la ligne brisée 20 portée sur le diagramme de la figure 1b.

Le câble 12 soumis à la tension de pose T2 est en appui sur le sol sur la distance $d_1$. Compte tenu du poids du câble et du frottement au sol, le câble 12 est considéré comme étant « encastré » au point 12b.

Lors de l'élévation du bras 8 matérialisé par le point 12a sur le diagramme, la tension dans la partie de câble d2 croît linéairement tel que l'illustre la ligne 20 à partir de la tension T2 pour atteindre la tension T4 (ligne 21) qui est la tension déterminée par la hauteur d'élévation du bras 8 soumis à la force constante F. La tension horizontale T4 est constante dans la « chaînette » c'est-à-dire à partir du point 12c où le câble est décollé du sol.

Après que les bras 8 se soient stabilisés à leur position haute en soumettant les câbles à la tension T4, l'opérateur manœuvre les vérins 17 pour réduire la pression hydraulique, ce qui a pour effet de faire pivoter les bras 8 vers le bas suivant un certain angle sans pour autant les mettre à leur position extrême basse.

Les câbles 12 qui étaient soumis à la tension T4 et corrélativement avaient subi un allongement maximum admissible A1 sont ramenés à une tension T5 intermédiaire entre les tensions T2 et T4, avec un allongement résiduel A2, consécutif au relâchement de la traction excercée sur les câbles.

Comme cela est représenté sur le diagramme de la figure 1c, on voit que la tension T5 est matérialisée par le point 20a situé sur la ligne 20 en deça de la position de la ligne 21 matérialisant la tension T4. Cette tension T5 étant la tension dans le câble 12 au point 12d distant du point 12b de la valeur d4.

A partir du point 12d et dans la partie du câble d5, la tension décroît linéairement de la tension T5 à la tension d'enfouissement des câbles T1, tel que l'illustre la ligne 22 portée sur le diagramme.

La tension T1 est matérialisée par la ligne 23, laquelle tension est celle des câbles « détensionnés ». Pour la clarté du diagramme de la figure 1c, on a négligé de représenter l'influence du frottement des câbles sur les parois des conduits de maintien de tranchée.

On remarque que la tension dans les parties de câble d4 et d5 croît dans la partie d4 et décroît dans la partie d5, dans la même proportion, tel que cela apparaît sur le diagramme de la figure 1c, les lignes concourantes 20/22 en 20 a formant avec l'horizontale matérialisée par la ligne en pointillés 18a/22a le même angle α.

**Revendications**

1. Dispositif pour mettre en place un câble (12) dans une tranchée pratiquée dans le fond marin, lequel dispositif comporte des moyens (3/4) pour déposer à une tension d'enfouissement T1 le câble (12) au fond de la tranchée et des moyens pour manutentionner ce câble pendant son enfouissement, lequel câble (12) repose initialement par son propre poids sur le fond marin et est soumis à une tension de pose T2, la tension de manutention du câble ne devant pas excéder une tension maximale de sécurité T3 prédéterminée, caractérisé en ce qu'il comporte des moyens (16/17) développant une force constante :

a) pour supporter le câble (12) en un point pris sur sa longueur et pour l'élever à une hauteur qui donne la valeur d'une tension de levage T4, de telle sorte que sa valeur T4 se situe entre la valeur de la tension de pose T2 et de la tension maximale de sécurité T3, cette action de levage provoquant un allongement permanent d'au moins une partie du câble et,

b) pour reposer sur le sol marin ladite partie de câble ayant subi cet allongement, la relaxation du câble (12) consécutive à l'action de descente du câble jusqu'au sol marin ramenant la tension du câble à la valeur de la tension d'enfouissement T1 qui est inférieure à la tension de pose T2.

2. Dispositif selon la revendication 1, comportant un habitacle (1b) muni d'un sas (1c) pour recevoir des opérateurs ; des moyens pour atteindre le fond marin à partir d'un support de surface et pour revenir sur ledit support et être déposé sur celui-ci ; des moyens (1a) pour se déplacer sur le sol marin ; une excavatrice (1d) pour creuser une tranchée dans le sol marin ; des moyens (4) pour maintenir les parois latérales de la tranchée et des moyens (3a/3c) pour guider jusqu'au fond de la tranché, au moins un câble (12) préalablement déposé sur le sol marin, caractérisé en ce que les moyens développant une force constante comportent au moins un bras de manutention (8) articulé par une de ses extrémités (9) à la structure du dispositif, relié à un organe de levage (16/17) développant une force constante pour provoquer son pivotement et corrélativement l'élévation de son extrémité libre, lequel bras de manutention (8) est d'une section droite en U dont la paroi de fond (8a) est d'un profil longitudinal convexe pour imprimer au câble (12) une courbure de grande amplitude et en ce que le bras est articulé à la structure par son extrémité arrière (9) et sa partie libre avant ($8b_2$) située à l'avant du dispositif est évasée pour pallier les défauts d'alignement du câble (12) préalablement déposé sur le sol marin et faciliter le mouvement relatif du câble et du bras (8) pendant son enfouissement.

3. Dispositif selon l'une quelconque des revendications 1 et 2, caractérisé en ce qu'il comporte deux bras de manutention (8), lesquels sont situés à l'avant et symétriquement de part et d'autre de l'axe longitudinal du dispositif, lesquels bras (8) sont dans le prolongement de deux conduits (4c) réservés dans un organe (4) dit « maintien de tranchée » destiné à soutenir les parois latérales de la tranchée avant l'ensouillage des câbles (12), lesquels conduits (4c) infléchissent les câbles (12) pour les amener symétriquement à proximité de l'axe de la tranchée et au fond de celle-ci.

4. Dispositif selon l'une quelconque des revendications 1 à 3, caractérisé en ce qu'il se compose de deux parties :

a) un ensemble (2/3/4) dit « inerte » destiné à être descendu sur le fond marin pour y demeurer pendant la durée des travaux, lequel ensemble (2/3/4) comporte les bras de manutention (8), les conduits (3a) pour guider les câbles (12( et l'organe (4) dit « maintien de tranchée » et,

b) un engin mobile (1) comportant des moyens (13e/14/1a) pour prendre en charge et déplacer sur le fond marin, l'ensemble « inerte » (2/3/4) ainsi que les moyens (16/17) pour actionner lesdits bras de manutention (8) sous l'effet d'une force constante.

5. Dispositif selon l'une quelconque des revendications 1 à 4, dont l'engin mobile (1) comporte un habitacle (1b) pour recevoir des opérateurs ; des moyens pour atteindre, à partir d'un support de surface, le fond marin et pour revenir vers ledit support et être déposé sur celui-ci ; des moyens (1a) pour se déplacer sur le fond marin et une excavatrice (1d) pour creuser une tranchée dans le fond marin, caractérisé en ce que l'ensemble inerte (2/3/4) comporte au moins un logement (2c) parallèle à l'axe longitudinal du dispositif et s'étendant dans un plan sensiblement horizontal et en ce que l'engin mobile (1) comporte au moins une corne (13) destinée à pénétrer dans le fourreau (2c) pour prendre en charge l'ensemble inerte (2/3/4) et provoquer son déplacement sur le fond marin.

6. Dispositif selon l'une quelconque des revendications 1 à 5, caractérisé en ce que les bras (8) de manutention des câbles (12) articulés à l'ensemble inerte (2/3/4) comportent des étriers (8d) s'étendant au-delà de la partie supérieure des bras et en ce que l'engin mobile (1) comporte des leviers (16) articulés par une de leurs extrémités (15) à l'engin (1) et dont l'autre extrémité (16a) est adaptée pour s'engager dans lesdits étriers (8d) et pour coopérer avec eux pour entraîner en pivotement lesdits bras (8), lesquels leviers (16) sont mûs par des vérins (17) développant une force constante dirigée de bas en haut.

7. Dispositif selon l'une quelconque des revendications 1 à 6, caractérisé en ce que les étriers (8d) sont articulés aux bras de manutention (8) et entourent les bras à leur partie supérieure.

8. Dispositif selon l'une quelconque des revendications 1 à 7, caractérisé en ce que l'extrémité libre (16a) des leviers (16) qui coopère avec les étriers (8d) est échancrée et adopte la forme générale d'un crochet.

9. Dispositif selon l'une quelconque des revendications 1 à 8, caractérisé en ce que l'ensemble « inerte » se compose d'au moins deux parties (2/4).

a) une partie (2) comprenant les bras de manutention (8) et lesdits logements (2c) pour la prise en charge de l'ensemble inerte par l'engin mobile (1),

b) une autre partie (4) comportant les conduits guides-câbles (4c) et l'organe dit « maintien de tranchée », ladite partie comportant les bras (8) et les logements (2c), étant articulée à l'autre autour d'un axe (10b) sensiblement vertical pour pivoter dans le sens transversal.

10. Dispositif selon l'une quelconque des revendications 1 à 9, dont l'excavatrice (1d) portée par l'engin mobile (1) est du type à chaîne à godets, caractérisé en ce que l'excavatrice (1d) est montée en bout d'une poutre (1e) s'étendant sensiblement dans l'axe longitudinal de l'engin mobile (1), laquelle poutre (1d) est articulée à l'extrémité d'au moins une biellette (1k) elle-même articulée par son autre extrémité à l'engin mobile (1), laquelle poutre (1e) est soumise à des moyens (5) pour provoquer le pivotement de la biellette (1k) et ainsi son déplacement dans le sens longitudinal pour obtenir le recul de l'excavatrice (1d) en vue de la dégager dans le cas d'un blocage dans le sol de la chaîne à godets, sans pour autant être amené à faire reculer l'engin mobile (1).

11. Dispositif selon la revendication 12, caractérisé en ce que la poutre (1e) est reliée à la biellette (1k) par une pièce intermédiaire (1j) et la poutre (1e) est articulée à cette pièce (1j) autour d'un axe sensiblement vertical (1h) pour pouvoir pivoter dans le sens transversal et ainsi autoriser des changements de direction du dispositif pendant qu'il est opérationnel.

12. Dispositif selon l'une quelconque des revendications 1 et 2, dont le bras (8) est dans le prolongement d'un conduit (4c) réservé dans un organe (4) dit « maintien de tranchée » destiné à soutenir les parois latérales de la tranchée avant l'ensouillage du câble (12), caractérisé en ce que le conduit (4c) comporte, à l'entrée dudit organe, au moins une paroi courbe (4c2) formant le fond du conduit, laquelle paroi (4c2) supporte le câble et lui communique une courbure de grande amplitude, ainsi qu'une seconde paroi courbe (4c7) disposée en opposition de ladite paroi de fond, laquelle seconde paroi (4c7) accompagne le câble (12) jusqu'à l'extrémité arrière inférieure du « maintien de tranchée » (4) et sur laquelle seconde paroi (4c7) le câble (12) est en appui pour provoquer une contre-courbure du câble (12) et l'amener sur le fond de la tranchée.

13. Dispositif selon la revendication 3, caractérisé en ce que l'organe « maintien de tranchée » (4) est d'une section droite en forme de T et chacun des conduits (4c) dudit organe comporte à l'entrée de celui-ci, au moins une paroi courbe (4c2) formant le fond du conduit, laquelle paroi supporte le câble (12) et lui communique une courbure de grande amplitude, ainsi qu'une seconde paroi courbe (4c7) disposée en opposition de ladite paroi de fond (4c2), laquelle seconde paroi (4c7) accompagne le câble (12) jusqu'à l'extrémité arrière inférieure du maintien de tranchée et sur laquelle seconde paroi (4c7) le câble est en appui pour provoquer une contre-courbure du câble (12) et l'amener sur le fond de la tranchée et en ce que lesdits conduits (4c2) convergent symétriquement à partir de l'entrée de l'organe (4) vers la partie centrale inférieure de celui-ci et se confondent à sa partie arrière qui comporte ladite seconde paroi courbe (4c7) pour former un seul conduit à la sortie du maintien de tranchée (4).

14. Dispositif selon l'une quelconque des revendications 1 à 11, caractérisé en ce qu'il comporte des moyens de freinage (24/27/41b) des câbles (12) disposés sur l'ensemble inerte (2), lesquels moyens sont actionnés par des moyens (38/39) portés par l'engin mobile (1) pour immobiliser les câbles (12) et interdire de mettre en tension la partie de câble enterrée et corrélativement exercer une action sur la partie libre des câbles en vue de les mettre à la tension T1 d'enfouissement.

15. Dispositif selon la revendication 14, caractérisé en ce que les moyens de freinage (24/27) des câbles (12) sont portés par chacun des bras de manutention (8) et consistent en un patin (24) disposé au-dessus de la paroi de fond (8a) desdits bras (8) et entre lesquels se trouve le câble, lequel patin (24) est soumis à l'action de moyens (27) pour le rapprocher ou l'éloigner de ladite paroi (8a).

16. Dispositif selon l'une quelconque des revendications 14 et 15, caractérisé en ce que ledit patin (24) adopte la forme d'une mâchoire s'étendant longitudinalement au bras, laquelle est articulée autour d'un axe (25) parallèle à la paroi de fond (8a) et passé à travers des alésages réservés dans les parois latérales (8b) du bras (8), laquelle mâchoire (24) pivote autour dudit axe (25) de telle sorte que son extrémité libre se rapproche de la paroi de fond (8a) pour pincer le câble contre celle-ci ou s'éloigne de ladite paroi (8a) pour libérer le câble et autoriser le mouvement relatif entre le câble et le bras (8) lors de l'avancement de la machine.

17. Dispositif selon l'une quelconque des revendications 14 à 16, caractérisé en ce que le patin est actionné par des moyens hydrauliques comportant un vérin récepteur (27) porté par ledit bras (8) et disposé dans le plan médian du bras au-dessous de la paroi de fond (8a) dont la tige mobile (27c) agit sur un étrier (28) articulé au patin (24), lequel étrier (28) est soumis à l'action de moyens élastiques (33) reliés au bras (8) pour ramener le patin (24) en position d'ouverture et libérer le câble.

18. Dispositif selon la revendication 17, caractérisé en ce que le vérin (27) est monté « libre » sur le bras (8) et comporte à son extrémité opposée à celle d'où émerge la tige mobile (27c), une portée bombée (27a) mise au contact de la paroi de fond du bras (8).

19. Dispositif selon l'une quelconque des revendications 13 à 18, caractérisé en ce que les moyens hydrauliques pour actionner les patins (24) se composent d'un vérin moteur (38) porté par l'engin mobile (1), lequel vérin moteur (38) se place, lors de la prise en charge de l'engin inerte (2) par l'engin mobile (1), dans le prolongement d'un vérin transmetteur (41) porté par l'engin inerte (2) et en ce que la tige mobile (38c) du vérin moteur (38) actionne le vérin transmetteur (41), lequel est relié auxdits vérins récepteurs (27) qui actionnent les patins (24).

**Claims**

1. Device for laying a cable (12) in a trench made in the sea bed, which device comprises means (3/4) for laying at a burying tension T1 the cable (12) at the bottom of the trench and means for handling said cable during the burying operation, which cable (12) initially rests by its own weight on the sea bed and is subjected to a laying tension T2, the handling tension of which cable should not exceed a maximal predetermined safety tension T3, characterized in that it comprises means (16/17) developing a constant force :

a) to support the cable (12) in a point taken on the length and to raise it at a height which gives the value of a lifting tension T4, so that its value T4 is between the value of the laying tension T2 and the maximal safety tension T3, the said lifting tension causing a permanent lengthening of at least a part of the cable, and

b) to lay on the sea bed said cable part having undergone this lengthening, the slackening of the cable (12) resulting from the action of lowering the cable to the sea bed returning the cable tension to the value of the burrying tension T1 which is less than the laying tension T2.

2. Device according to claim 1, comprising a binnacle (1b) provided with a lock chamber (1c) to receive the operators ; means for reaching the sea bed from a surface support and for returning on said support and for being deposited thereupon ; means (1a) for moving on the sea bed ; an excavator (1d) for digging a trench in the sea bed ; means (4) for maintining the lateral walls of the trench and means (3a/3c) for guiding to the bottom of the trench at least a cable (12) previously laid on the sea bed, characterized in that the means developing a constant force comprise at least a handling arm (8) mounted for pivoting by one of its ends (9) on the structure of the device, connected to a lifting member (16/17) developing a constant force to induce its pivoting movement and correlatively raising its free end, which handling arm (8) is of a U-shaped cross section whose bottom wall (8a) is of a convex longitudinal profile to impart to the cable (12) a curve of large amplitude and in that the arm is mounted for pivoting on the structure by its rear end (9) and its front free end (8b$_2$) situated at the front of the device is widening out to remedy the alignment faults of the cable (12) previously laid on the sea bed and facilitate the relative movement of the cable and of the arm (8) during its burying.

3. Device according to anyone of claims 1 and 2, characterized in that it comprises two handling arms (8), which are situated at the front and symetrically on both sides of the longitudinal axis of the device, which arms (8) are situated in extension of the two conduits (4c) provided in a so-called « trench upholding » member (4) inten-

ded to support the lateral walls of the trench before the burial of the cables (12) said conduits (4c) bend-in the cables (12) to bring them symetrically near the axis of the trench and at the bottom thereof.

4. Device according to anyone of claims 1 to 3, characterized in that it comprises two parts :

a) a so-called inert assembly (2/3/4) intended to be lowered to the sea bed to stay there throughout the duration of the works, said assembly (2/3/4) comprising handling arms (8), conduits (3a) to guide the cables (12) and the so-called « trench upholding » member (4) and,

b) a movable machine (1) comprising means (13e/14/1a) for loading and moving over the sea bed, the « inert » assembly (2/3/4) as well as the means for actuating (16/17) said handling arm (8) under the effect of a constant force.

5. Device according to anyone of claims 1 to 4, of which the movable machine (1) comprises a binnacle (1b) to receive the operators ; means for reaching the sea bed from a surface support, and for returning back towards said support and for being deposited thereupon ; means (1a) for moving over the sea bed and an excavator (1d) to dig the trench in the sea bed, characterized in that the inert assembly (2/3/4) at least comprises a housing (2c) parallel to the longitudinal axis of the device and extending in a substantially horizontal plane, and in that the movable machine (1) comprises at least a horn-like member (13) intended to penetrate into the sleeve (2c) to load the inert assembly (2/3/4) and induce its displacement on the sea bed.

6. Device according to anyone of claims 1 to 5, characterized in that the arms (8) for handling the cables mounted for pivoting on the inert assembly (2/3/4) comprise stirrup members (8d) extending beyond the upper part of the arm and in that the movable machine (1) comprises levers (16) mounted for pivoting by one of their ends (15) on the machine (1) whereas the other end (16a) is adapted to engage in said stirrups (8d) and to cooperate with the latter for driving said arms (8) in rotation, said levers (16) are driven by jacks (17) developing a constant force directed upwards from the bottom.

7. Device according to anyone of claims 1 to 6, characterized in that the stirrup members (8d) are mounted for pivoting on the handling arms (8) and surround the arms at their upper part.

8. Device according to anyone of claims 1 to 7, characterized in that the free end (16a) of the levers (16) which cooperate with the stirrups members (8d) is indented and takes on the general shape of a hook.

9. Device according to anyone of claims 1 to 8, characterized in that he « inert » assembly is constituted by at least two parts (2/4),

a) a part (2) comprising the handling arms (8) and said housings (2c) for loading the inert assembly by the movable machine,

b) an other part (4) comprising the cables-guiding conduits (4c) and the so-called trench upholding member, said part comprising the arms (8) and the housings (2c) being mounted for pivoting on the other part about a substantially vertical axis (10b) to rotate in the transversal direction.

10. Device according to anyone of claims 1 to 9, of which the excavator (1d) carried by the movable machine (1) is of the bucket-chain type, characterized in that the excavator (1d) is mounted at the end of a beam (1e) substantially extending in the longitudinal axis of the movable machine (1), said beam (1d) is mounted for pivoting at the end of at least one small rod (1k) which rod is itself mounted for pivoting by its other end on the movable machine (1), said beam (1e) being subjected to means (5) for inducing the pivoting movement of the small rod (1k) hence its displacement in the longitudinal direction to obtain the backing of the excavator (1d) with the view to releasing same in case of blockage in the ground of the bucket-chain, without however having to back the movable machine (1).

11. Device according to claim 10, characterized in that the beam (1e) is connected to the small rod (1k) by a middle member (1j) and the beam (1e) is mounted for pivoting on said member (1j) about a substantially vertical axis (1h) to pivote in the transversal direction and hence allow for changes of direction of the device when it is operational.

12. Device according to anyone of claims 1 and 2, of which the arm (8) is in the extension of a conduit (4c) provided in a so-called « trench upholding » member designed to support the lateral walls of the trench before the burial of the cable (12), characterized in that the conduit (4c) comprises at the front of said member, at least one curved wall (4c2) constituting the bottom of the conduit, which wall (4c2) supports the cable and imparts to the cable a curve of large amplitude, as well as a second curved wall (4c7) accompanies the cable (12) to the lower rear end of the trench upholding and against said second wall (4c7) rests the cable (12) to induce a countercurve of the cable (12) and to bring it to the bottom of the trench.

13. Device according to claim 3, characterized in that the « trench upholding » member (4) is of T shaped cross section and each of the conduits (4c) of said member comprises at the front of the latter at least one curved wall (4c2) constituting the bottom of the conduit, said wall supports the cable (12) and imparts to it a curve of large amplitude, as well as a second curved wall (4c7) placed opposite said bottom wall (4c2), which second wall (4c7) accompanies the cable (12) to the lower rear end of the trench upholding and against said second wall (4c7) rests the cable to cause a counter-curve of the cable (12) and bring it to the bottom of the trench, and in that said conduits (4c2) symetrically converge from the front of the member (4) towards the lower central part of the latter and merge in its rear part which comprises said second curved wall (4c7) to constitute a single conduit at the output of the trench upholding (4).

14. Device according to anyone of claims 1 to 11, characterized in that it comprises means for braking (24/27/41b) the cables (12) provided on the inert assembly (2), which means are actuated by means (38/39) carried by the movable machine (1) to immobilize the cables (12) and prevent the tensioning of the buried part of the cable and correlatively exert an action on the free part in order to bring them to the burying tension T1.

15. Device according to claim 14, characterized in that the means for braking (24/27) the cables (12) are carried by each of the handling arms (8) and consist in a pad (24) placed above the bottom wall (8a) of said arms (8), the cable being placed between the latter, said pad (24) is subjected to the action of means (27) for bringing it nearer or move it away from said wall (8a).

16. Device according to anyone of claims 14 and 15, characterized in that said pad (24) takes on the shape of a jaw extending longitudinally to the arm, which jaw is mounted for pivoting about an axis (25) parallel to the bottom wall (8a) and passed through borings provided in the lateral walls (8b) of the arm (8), said jaw (24) pivoting about said axis (25) so that its free end comes closer to the bottom wall (8a) to squeeze the cable against the latter, or moves away from said wall (8a) to release the cable and allow the relative movement between the cable and the arm (8) when the machine advances.

17. Device according to anyone of claims 14 to 16, characterized in that the pad is actuated by hydraulic means comprising a receiving jack (27) carried by the arm (8) and placed in the median plane of the arm and under the bottom wall (8a) whose movable road (27c) actuates on a stirrup member (28) mounted for pivoting on the pad (24), said stirrup member (28) is subjected to the action of elstic means (33) connected to the arm (8) to bring the pad (24) in aperture position and release the cable.

18. Device according to claim 17, characterized in that the jack (27) is « freely » mounted on the arm (8) and comprises at its end opposite that from which the movable rod (27c) issues, a curved projection (27a) in contact with the wall of the arm (8).

19. Device according to anyone of claims 13 to 18, characterized in that the hydraulic means for actuating the pads (24) are constituted by a motor jack (38) carried by the movable engine (1) which motor jack (38) is placed during the load of the inert machine (2) by the movable machine (1) on the extension of a transmitting jack (41) carried by the inert machine (2) and in that the movable jack (38c) of the motor jack (38) actuates the transmitting jack (41), which is connected to said receiving jacks (27) which actuate the pads (24).

**Patentansprüche**

1. Vorrichtung zum Einführen eines Kabels (12) in einen im Meeresboden angelegten Graben, welche Vorrichtung Mittel (3/4) zum Ablegen des Kabels (12) auf den Grund des Grabens unter einer Eingrabungsspannung T1 und Mittel zum Transportieren des Kabels während des Eingrabens umfaßt, welches Kabel (12) anfänglich durch sein Eigengewicht am Meeresboden liegt und einer Verlegungsspannung T2 unterworfen wird, wobei die Transportspannung des Kabels eine vorbestimmte maximale Sicherheitsspannung T3 nicht überschreiten darf, dadurch gekennzeichnet, daß sie Mittel (16/17) zum Erzeugen einer konstanten Kraft umfaßt, um :

a) das Kabel (12) an einem gegebenen Punkt über seine Länge zu unterstützen und auf eine den Wert einer Hubspannung T4 ergebende Höhe derart zu heben, daß dieser Wert T4 zwischen dem Wert der Verlegungsspannung T2 und der maximalen Sicherheitsspannung T3 liegt, wobei dieser Hubvorgang eine permanente Dehnung zumindest eines Teils des Kabels bewirkt, und

b) den dieser Dehnung unterworfenen Kabelteil auf dem Meeresboden zu verlegen, wobei dei Entspannung des Kabels (12) infolge des Absenkvorgangs des Kabels auf den Meeresboden die Spannung des Kabels auf den Wert der Eingrabungsspannung T1, der niedriger als die Verlegungsspannung T2 ist, bringt.

2. Vorrichtung nach Anspruch 1, mit einer mit einer Materialzufuhrschleuse (1c) versehenen Kabine (1b) zur Aufnahme von Arbeitern, Mitteln zum Erreichen des Meeresbodens von einem Oberflächenträger und zum Zurückkehren auf diesen Träger und Abstellen auf demselben, Mitteln (1a) zum Fortbewegen auf dem Meeresboden, einem Bagger (1d) zum Ausheben eines Grabens im Meeresboden, Mitteln (4) zum Stützen der Seitenwände des Grabens und Mitteln (3a/3c) zum Führen von zumindest einem zuvor auf dem Meeresboden abgelegten Kabel (12) bis auf den Grund des Grabens, dadurch gekennzeichnet, daß die eine konstante Kraft erzeugenden Mittel mindestens einen Transportarm (8) umfassen, welcher mit einem Ende (9) am Gerüst der Vorrichtung angelenkt und mit einem eine konstante Kraft zum Bewirken seines Schwenkens und damit zusammenhängend des Hebens seines freien Endes erzeugenden Huborgan (16/17) verbunden ist, und welcher Transportarm (8) U-förmigen Querschnitt hat, wobei die Bodenwand (8a) ein konvexes Längsprofil aufweist, um dem Kabel (12) eine Krümmung von großer Weite zu verleihen, und daß der Arm mit seinem hinteren Ende (9) am Gerüst angelenkt ist und sein freier, vor der Vorrichtung befindlicher vorderer Teil (8b$_2$) zum Beseitigen von Ausrichtungsfehlern des zuvor auf dem Meeresboden abgelegten Kabels (12) und zum Erleichtern der Relativbewegung von Kabel und Arm (8) während des Eingrabens erweitert ist.

3. Vorrichtung nach einem der Ansprüche 1 und 2, dadurch gekennzeichnet, daß sie zwei vor und symmetrisch zu beiden Seiten der Längsachse der Vorrichtung befindliche Transportarme (8) umfaßt, welche Arme (8) in Verlängerung zweier Führungen (4c) angeordnet sind, die in einem zum Stützen der Seitenwände des Grabens vor Versenken der Kabel (12) im Boden dienenden « Grabensicherungs »-Organ (4) vorgesehn sind, welche Führungen (4c) die Kabeln (12) biegen, um sie symmetrisch in die Nähe der Grabenachse und auf den Grund desselben zu bringen.

4. Vorrichtung nach einem der Ansprüche 1 bis 3, dadurch gekennzeichnet, daß sie aus zwei Teilen zusammengesetzt ist :

a) einer « inerten » Gruppe (2/3/4) zum Absenken auf den Meeresboden, um dort während der Dauer der Arbeiten zu bleiben, welche Gruppe (2/3/4) die Transportarme (8), die Führungen (3a) zum Führen der Kabeln (12) und das « Grabensicherungs »-Organ (4) umfaßt, und

b) einer Antriebseinrichtung (1) mit Mitteln (13e/14/1a) zum Betrieb und zum Bewegen der « inerten » Gruppe (2/3/4) auf dem Meeresboden sowie der Mitteln (16/17) zum Betätigen der Transportarme (8) unter der Wirkung einer konstanten Kraft.

5. Vorrichtung nach einem der Ansprüche 1 bis 4, bei welcher die Antriebseinrichtung (1) eine Kabine zur Aufnahme von Arbeitern, Mittel zum Erreichen des Meeresbodens von einem Oberflächenträger und zum Zurükkehren auf diesen Träger und Abstellen auf demselben, Mittel (1a) zum Fortbewegen auf dem Meeresboden und einen Bagger (1d) zum Ausheben eines Grabens im Meeresboden umfaßt, dadurch gekennzeichnet, daß die inerte Gruppe (2/3/4) mindestens eine parallel zur Längsachse der Vorrichtung befindliche und sich in einer im wesentlichen horizontalen Ebene erstreckende Aufnahme (2c) umfaßt, und daß die Antriebseinrichtung (1) mindestens ein zur Inbetriebnahme der inerten Gruppe (2/3/4) und Bewegen derselben auf dem Meeresboden zum Eindringen in die Aufnahme (2c) bestimmtes Horn (13) umfaßt.

6. Vorrichtung nach einem der Ansprüche 1 bis 5, dadurch gekennzeichnet, daß die Transportarme (8) für die Kabeln (12) ; die an der inerten Gruppe (2/3/4) angelenkt sind, über den Oberteil der Arme hinaus reichende Bügel (8d) umfassen, und daß die Antriebseinrichtung (1) Hebel (16) umfaßt, die mit einem ihrer Enden (15) an der Antriebseinrichtung (1) angelenkt sind und deren anderes Ende (16a) zum Ineingriffkommen mit den Bügeln (8d) und zum Zusammenwirken mit diesen zwecks Schwenkens der Arme (8) ausgestaltet ist, und welche Hebel (16) durch eine konstante, von unten nach oben gerichtete Kraft erzeugende Zylinder (17) bewegt sind.

7. Vorrichtung nach einem der Ansprüche 1 bis 6, dadurch gekennzeichnet, daß die Bügel (8d) an den Transportarmen (8) angelenkt sind und die Arme an ihrem oberen Teil umgeben.

8. Vorrichtung nach einem der Ansprüche 1 bis 7, dadurch gekennzeichnet, daß das freie Ende (16a) der Hebel (16), das mit den Bügeln (8d) zusammenwirkt, bogenförmig ausgeschnitten ist und die allgemeine Form eines Hakens hat.

9. Vorrichtung nach einem der Ansprüche 1 bis 8, dadurch gekennzeichnet, daß die « inerte » (24/27/41b) für die Kabel (12) umfaßt, welche mengesetzt ist,

a) einem Teil (2), welcher die Transportarme (8) und die Aufnahmen (2c) zur Inbetriebnahme der inerten Gruppe mittels der Antriebseinrichtung (1) umfaßt,

b) einem weiteren Teil (4), welcher die Kabel-Leitführungen (4c) und das « Grabensicherungs »-Organ umfaßt, wobei der die Arme (8) und Aufnahmen (2c) aufweisende Teil um eine im wesentlichen vertikale Achse (10b) in Querrichtung schwenkbeweglich am anderen Teil angelenkt ist.

10. Vorrichtung nach einem der Ansprüche 1 bis 9, bei welcher der von der Antriebseinrichtung (1) getragene Bagger (1d) des Typs mit Eimerkette ist, dadurch gekennzeichnet, daß der Bagger (1d) am Ende eines sich im wesentlichen entlang der Längsachse der Antriebseinrichtung (1) erstreckenden Trägers (1e) befestigt ist, welcher Träger (1d) am Ende von zumindest einer Gelenklasche (1k) angelenkt ist, die wiederum mit ihrem anderen Ende an der Antriebseinrichtung (1) angelenkt ist, und welcher Träger (1e) durch Mittel (5) beaufschlagt ist, um ein Schwenken der Gelenklasche (1k) und somit seine Verschiebung in Längsrichtung zur Erzielung des Rücklaufs des Baggers (1d) zwecks Freisetzens desselben bei einem Blockieren der Eimerkette im Boden zu bewirken, ohne jedoch dabei die Antriebseinrichtung (1) zurückbewegen zu müssen.

11. Vorrichtung nach Anspruch 10, dadurch gekennzeichnet, daß der Träger (1e) mittels eines Zwischenstücks (1j) mit der Gelenklasche (1k) verbunden ist und der Träger (1e) um eine im wesentlichen vertikale Achse (1h) in Querrichtung schwenkbeweglich an diesem Stück (1j) angelenkt ist, um so Richtungsänderungen der Vorrichtung während des Betriebes zu gestatten.

12. Vorrichtung nach einem der Ansprüche 1 und 2, bei welcher der Arm (8) in Verlängerung einer Führung (4c) angeordnet ist, die in einem zum Stützen der Seitenwände des Grabens vor Versenken des Kabels (12) im Boden dienenden « Grabensicherungs »-Organ (4) vorgesehen ist, dadurch gekennzeichnet, daß die Führung (4c) am Eingang des Organs mindestens eine die Führungssohle bildende Krümmungswand (4c₂) aufweist, welche Wand (4c₂) das Kabel stützt und ihm eine Krümmung von großer Weite verleiht, sowie eine zweite, gegenüber der Führungssohlenwand angeordnete Krümmungswand (4c₇) aufweist, welche zweite Wand (4c₇) mit dem Kabel (12) bis zum unteren hinteren Ende der « Grabensicherung » (4) verläuft und auf welcher zweiten Wand (4c₇) das Kabel (12) zur Bildung einer Gegenkrümmung des kabels (12) und Hinleitung desselben zum Grabengrund anliegt.

13. Vorrichtung nach Anspruch 3, dadurch gekennzeichnet, daß das « Grabensicherungs »-Organ (4) T-förmigen Querschnitt hat und jede der Führungen (4c) des Organs am Eingang desselben mindestens eine die Führungssohle bildende Krümmungswand (4c₂) aufweist, welche Krümmungswand das Kabel (12) stützt und ihm eine Krümmung von großer Weite verleiht, sowie eine zweite, gegenüber der Führungssohlenwand (4c₂) angeordnete Krümmungswand (4c₇) auf-

weist, welche zweite Wand (4c$_7$) mit dem Kabel (12) bis zum unteren hinteren Ende der Grabensicherung verläuft und auf welcher zweiten Wand (4c$_7$) das Kabel zur Bildung einer Gegenkrümmung des Kabels (12) und Hinleitung desselben zum Grabbengrund anliegt, und daß die Führungen (4c) vom Eingang des Organs (4) zum unteren Mittelteil desselben symmetrisch zusammenlaufen und in seinem hinteren, die zweite Krümmungswand (4c$_7$) umfassenden Teil sich zur Bildung einer einzigen Führung am Ausgang der Grabensicherung (4) vereinigen.

14. Vorrichtung nach einem der Ansprüche 1 bis 11, dadurch gekennzeichnet, daß sie an der inerten Gruppe (2) angeordnete Bremsmittel (24/27/41b) für die Kabel (12) umfaßt, welche Bremsmittel durch von der Antriebseinrichtung (1) getragenen Mittel (38/39) betätigt werden, um die Kabeln (12) unbeweglich zu machen und zu verhindern, daß der in der Erde befindliche Kabelteil unter Spannung gesetzt wird und dementsprechend eine Wirkung auf den freien Teil der Kabeln zum Setzen derselben unter die Eingrabungsspannung T1 ausgeübt wird.

15. Vorrichtung nach Anspruch 14, dadurch gekennzeichnet, daß die Bremsmittel (24/27) für die Kabel (12) von jeweils einem Transportarm (8) getragen sind und aus einer über der Bodenwand (8a) der Arme (8) angeordneten Kufe (24) bestehen, zwischen denen sich das Kabel befindet, wobei die Kufe (24) der Wirkung von Mitteln (27) zum Annähern an die Wand (8a) oder Entfernen von derselben unterworfen ist.

16. Vorrichtung nach einem der Ansprüche 14 und 15, durch gekennzeichnet, daß die Kufe (24) die Form einer entlang des Arms verlaufenden Klemmbacke hat, die um eine parallel zur Bodenwand (8a) verlaufende und durch in den Seitenwänden (8b) des Arms (8) vorgesehene Bohrungen durchgehende Achse (25) beweglich befestigt ist und derart um die Achse (25) schwenkt, daß sich ihr freies Ende zwecks Klemmens des Kabels gegen die Bodenwand (8a) dieser nähert oder zwecks Freigebens des Kabels und Ermöglichens der Relativbewegung zwischen Kabel und Arm (8) bei Vorschub der Maschine von dieser entfernt.

17. Vorrichtung nach einem der Ansprüche 14 bis 16, dadurch gekennzeichnet, daß die Kufe durch hydraulische, ein Empfangsstellglied (27) aufweisende Mittel betätigt wird, welches vom Arm (8) getragen und in der Mittelebene des Arms und unterhalb der Bodenwand (8a) angeordnet ist und dessen bewegliche Stange (27c) auf einen an der Kufe (24) angelenkten Bügel (28) wirkt, welcher Bügel (28) zwecks Führens der Kufe (24) in Öffnungsstellung und Freigabe des Kabels der Wirkung von mit dem Arm (8) verbundenen elastischen Mitteln (33) unterworfen ist.

18. Vorrichtung nach Anspruch 17, dadurch gekennzeichnet, daß der Zylinder (27) « frei » am Arm (8) gelagert ist und an seinem Ende, das jenem, auf dem die bewegliche Stange (27c) aufscheint, gegenüberliegt, eine mit der Bodenwand des Arms (8) in Kontakt befindliche bombierte Lagerfläche (27a) aufweist.

19. Vorrichtung nach einem der Ansprüche 13 bis 18, dadurch gekennzeichnet, daß die hydraulischen Mittel zum Aktivieren der Kufen (24) aus einem von der Antriebseinrichtung (1) getragenen Antriebszylinder (38) bestehen, welcher Antriebszylinder (38) bei Inbetriebnahme des inerten Antriebs (2) durch die Antriebseinrichtung (1) in der Verlängerung eines vom inerten Antrieb (2) getragenen Übertragungszylinders (41) zu liegen kommt, und daß die bewegliche Stange (38c) des Antriebszylinders (38) den Übertragungszylinder (41) betätigt, welcher mit den die Kufen (24) betätigenden Empfangsstellgliedern (27) verbunden ist.

(Fig-1)

Fig-1a

$T_2$  
$T$  
18  
12  
$Dx$

Fig-1b

$T_3$  
$T_4$  
$T_2$  
18  
19  
20  
21  
12  
12a  
12b  
12c  
$d1$  
$d2$  
$d3$  
$Dx$

Fig-1c

$T_5$  
$T_2$  
$T_1$  
18  
12  
18a  
20  
20a  
22  
22a  
23  
12b  
12d  
$\alpha$  
$d1$  
$d4$  
$d5$  
$Dx$

1

Fig.2

Fig.3

Fig. 4

0 056 778

Fig-5

Labels: 4, 4c, 4c2, 4a, 4d, 4d1, 4b, 4c2, 4c5, 4c6, 4c7, 12, h, VI, U, 5

Fig.6

Fig.7

0 056 778

Fig. 8

0 056 778

26    27    24d

8b3                          26a

                             24

8b                           24a

                             8b

                             8a

27a                          28b

28b          27              8

                             28

27c                          28

28a

**Fig-9**

8b

35    28b    8a1    35      8b

**Fig-10**

8b                           8

32           32              8

28a          27c

32           32              8b

8b

**Fig-11**

Fig-12

Fig.13